# FASCICULE DE BREVET EUROPEEN

(11) **EP 2 032 649 B1**
(45) Date de publication et mention de la délivrance du brevet: **03.08.2011**
(21) Numéro de dépôt: 07788972.3
(22) Date de dépôt: 11.06.2007
(51) Int. Cl.: C08L 67/04, B32B 27/08

(54) **COMPOSITION DE POLYACIDE LACTIQUE PRESENTANT UNE RESISTANCE AUX CHOCS AMELIOREE**
POLY(MILCHSÄURE)ZUSAMMENSETZUNG MIT VERBESSERTER SCHLAGZÄHIGKEIT
POLY(LACTIC ACID) COMPOSITION WITH IMPROVED IMPACT RESISTANCE

(30) Priorité: 16.06.2006 FR 0652160; 11.07.2006 US 819862 P
(43) Date de publication de la demande: 11.03.2009
(73) Titulaire: ARKEMA FRANCE, 92700 Colombes (FR)
(72) Inventeur: FINE, Thomas, 77300 Fontainebleau (FR); KHUSRAWY, Maliha, 27300 Bernay (FR)
(86) Numéro de dépôt international: PCT/FR2007/051403
(87) Numéro de publication internationale: WO 2007/144529

(56) Documents cités:
- WO-A-2004/101642
- WO-A-2005/059031

## Description

### Domaine technique :

La présente invention concerne une composition de polyacide lactique présentant une résistance aux chocs améliorée.

### Technique antérieure :

Le polyacide lactique (PLA) est un polyester synthétisé à partir d'un monomère d'origine végétale. En raison de ses propriétés biodégradables et renouvelables, il présente un intérêt majeur. Toutefois, il s'agit d'un polymère particulièrement fragile qui nécessite un renforcement aux chocs.

Dans l'état actuel de la technique, JP H09-316310 décrit des compositions de PLA renfermant des copolymères éthylène-méthacrylate de glycidyle greffés avec du polystyrène ou du polydiméthacrylate ou encore, des polyoléfines greffées avec l'anhydride maléique.

Plus récemment, WO 2005/059031 décrit des résines PLA modifiées à l'impact par un mélange contenant au moins 50% d'un copolymère éthylène-(méth)acrylate d'alkyle-(méth)acrylate de glycidyle.avec un copolymère éthylène-(méth)acrylate d'alkyle.

Ces compositions présentent certes une résistance aux chocs améliorée, toutefois, cette résistance n'est pas encore entièrement satisfaisante, notamment à basse température.

D'autre part, ces compositions présentent une fluidité nettement inférieure à celle du PLA. Cette baisse importante de fluidité est nuisible à la mise en oeuvre, tout particulièrement pour les pièces injectées fines et de grande dimension.

Le but de la présente invention est de proposer une composition de PLA qui présente à la fois une bonne résistance aux chocs, notamment à basse température, et une bonne fluidité.

### Exposé de l'invention :

La présente invention concerne une composition de polyacide lactique comprenant en poids :
- 60 à 97 % de polyacide lactique (PLA) et,
- 3 à 40 % d'un mélange de composés A et B dans lequel,
   o A est un copolymère d'éthylène et d'un monomère insaturé porteur d'au moins une fonction époxyde- ou acide carboxylique ou anhydride d'acide carboxylique, et éventuellement de (méth)acrylate d'alkyle,
   o B est un copolymère d'éthylène et de (méth)acrylate d'alkyle,
   ledit mélange présentant un rapport % poids (A) / % poids (A +B) compris entre 0,10 et 0,49.

La Demanderesse a découvert de façon surprenante que des compositions de PLA renfermant majoritairement du copolymère éthylène-(méth)acrylate d'alkyle dans le mélange A + B confèrent, aux pièces obtenues à partir de ces compositions, une résistance aux chocs améliorée, à température ambiante et tout particulièrement à froid. Cette résistance aux chocs est supérieure à celle des compositions riches en copolymère éthylène-(méth)acrylate d'alkyle-(méth)acrylate de glycidyle.

En outre, ces compositions présentent un bon compromis entre la résistance aux chocs et la viscosité.

Selon une variante de l'invention, le composé A est un copolymère de l'éthylène et d'un époxyde insaturé qui peut être obtenu par copolymérisation de l'éthylène et d'un époxyde insaturé ou par greffage de l'époxyde insaturé sur le polyéthylène. Le greffage peut être effectué en phase solvant ou sur le polyéthylène en fusion en présence d'un péroxyde. Ces techniques de greffage sont connues en elles-mêmes. Quant à la copolymérisation de l'éthylène et d'un époxyde insaturé, on peut utiliser les procédés dits de polymérisation radicalaire fonctionnant habituellement à des pressions entre 200 et 2 500 bars.

A titre d'exemple d'époxydes insaturés, on peut citer :
- les esters et éthers de glycidyle aliphatiques tels que l'allylglycidyléther, le vinyl glycidyléther, le maléate et l'itaconate de glycidyle, le (méth)acrylate de glycidyle, et,
- les esters et éthers de gycidyle alicycliques tels que le 2-cyclohexène-1-glycidyléther, le cyclohexène-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

Le copolymère d'éthylène et d'époxyde insaturé peut comprendre aussi d'autres monomères pouvant être choisis par exemple parmi :
- les alphaoléfines telles que le propylène, le butène-1, l'hexène...
- les esters vinyliques d'acides carboxyliques saturés tels que l'acétate de vinyle ou le propionate de vinyle
- les esters d'acide carboxyliques saturés tels que les (méth)acrylates d'alkyle pouvant avoir jusqu'à 24 carbones.

A titre d'exemple on peut greffer l'époxyde insaturé sur les polymères suivants :
- le polyéthylène, les copolymères de l'éthylène et d'une alphaoléfine, les polyéthylènes tels que le VLDPE (PE très basse densité), le ULDPE (PE ultra basse densité) ou le PE métallocène ;
- les copolymères de l'éthylène et au moins un ester vinylique d'acide carboxylique saturé tel que l'acétate de vinyle ou le propionate de vinyle
- les copolymères due l'éthylène et d'au moins un ester d'acide carboxylique insaturé, tels que les (méth)acrylates d'alkyle pouvant avoir jusqu'à 24 carbones ;
- les élastomères EPR (éthylène/propylène rubber) ou les EPDM (éthylène/propylène/diène) ;
- des mélanges de polymères choisis parmi les précédents.

Le composé A de l'invention est avantageusement un copolymère éthylène/(méth)acrylate d'alkyle/époxyde insaturé.

Avantageusement, il peut contenir jusqu'à 40 % en poids de (méth)acrylate d'alkyle.

L'époxyde est avantageusement le (méth)acrylate de glycidyle.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de n-octyle et l'acrylate de 2-éthylhexyle

La quantité de (méth)acrylate d'alkyle est avantageusement de 20 à 35 %.

L'indice de fluidité ou MFI (MFI ou Melt Flow Index qui désigne l'indice d'écoulement à l'état fondu) de A est avantageusement compris entre 2 et 40 et de préférence de 5 à 20 (190°C - 2,16 kg).

Ce copolymère peut être obtenu par polymérisation radicalaire des monomères.

Selon une autre variante, le composé A est un copolymère de l'éthylène et d'un anhydride d'acide carboxylique insaturé.

A est soit un copolymère de l'éthylène et d'un anhydride d'acide carboxylique insaturé soit une polyoléfine greffée par un anhydride d'acide carboxylique insaturé.

La polyoléfine peut être choisie parmi les polyoléfines pouvant être greffées par un époxyde insaturé citées plus haut.

Des exemples d'anhydrides d'acide dicarboxylique insaturé utilisables comme constituants de A sont notamment l'anhydride maléique, l'anhydride itaconique, l'anhydride citraconique, l'anhydride tétrahydrophtalique.

A titre d'exemple, on peut citer les copolymères de l'éthylène d'un (méth)acrylate d'alkyle, d'un anhydride d'acide carboxylique insaturé et les copolymères de l'éthylène, d'un ester vinylique d'acide carboxylique saturé et d'un anhydride d'acide carboxylique insaturé.

La quantité d'anhydride carboxylique insaturé peut être jusqu'à 15 % en poids du copolymère et la quantité d'éthylène d'au moins 50 % en poids.

Avantageusement, A est un copolymère de l'éthylène, d'un (méth)acrylate d'alkyle et d'un anhydride carboxylique insaturé. De préférence, le (méth)acrylate d'alkyle est tel que l'alkyle possède 2 à 10 atomes de carbone.

Le (méth)acrylate d'alkyle peut être choisi parmi ceux cités plus haut.

Le MFI de A peut être par exemple entre 0,1 et 50 (g/10 mn à 190°C sous 2,16 kg).

Selon l'invention, le composé B est un copolymère de l'éthylène et d'un (méth)acrylate d'alkyle. Le (méth)acrylate d'alkyle peut être choisi avantageusement parmi le (méth)acrylate de méthyle, l'acrylate d'éthyle, l'acrylate de n-butyle, l'acrylate d'isobutyle, l'acrylate de n-octyle et l'acrylate de 2-éthylhexyle.

La quantité de (méth)acrylate d'alkyle est avantageusement de 20 à 40 %.

Selon un premier aspect de l'invention, la composition présente un rapport % poids (A)/ % poids (A +B) du mélange compris entre 0,15 et 0,40, et préférentiellement entre 0,20 et 0,30.

La présente invention concerne également un procédé de préparation par extrusion des compositions mentionnées ci-dessus. On peut opérer selon deux modes de réalisation particuliers :
- Par mélange simultané du PLA, de A et de B ou,
- Par la réalisation successive des deux étapes suivantes :
   a) le mélange de A et B, puis,
   b) le mélange du produit issu de a) avec le PLA.

En outre, l'invention se rapporte à l'utilisation de ces compositions ainsi qu'à des pièces ou objets fabriqués à partir de telles compositions.

A titre non limitatif, on peut citer la fabrication de pièces moulées par injection, de films et feuilles extrudés et éventuellement thermoformés, de corps creux mis en forme par extrusion soufflage, de récipients tels que des barquettes...

Les pièces ou objets ainsi obtenus peuvent subir une étape de recuit, afin de contrôler la cristallinité.

Ce contrôle peut également être obtenu par addition, dans la composition selon l'invention ou dans le PLA, d'un agent nucléant.

L'invention concerne également une structure multicouche comprenant une couche de la composition correspondant à l'invention et au moins une couche d'un thermoplastique choisi parmi le polyéthylène (PE), le polypropylène (PP), le polystyrène (PS), le polyamide (PA) et le copolymère éthylène / alcool vinylique (EVOH).

La présente invention va être maintenant illustrée par des exemples particuliers de réalisation qui vont être décrits ci-après. Il est précisé que ces exemples ne visent en aucun cas à limiter la portée de la présente invention.

### Exemples :

### Matières utilisées :

Le polyacide lactique ou PLA est commercialisé par Natureworks, sous la référence PLA 2002D.

Le composé A utilisé est un terpolymère d'éthylène (68 % pondéral), d'acrylate de Méthyle (AMe) (24 % pondéral) et de méthacrylate de glycidyle (GMA)(8 % pondéral), ayant un MFI égal à 6. Ce terpolymère est commercialisé par Arkema France, sous la référence Lotader® AX8900.

Le composé B utilisé est un copolymère d'éthylène (70% pondéral) et de butylacrylate (30% pondéral), ayant un MFI compris entre 1,5 et 2,5. Ce copolymère est commercialisé par Arkema France sous la référence Lotryl® 30BA02.

### Caractéristiques des compositions testées :

o Composition de référence : Essai 1 : 100%PLA
o Compositions à titre comparatif : Essais 2 et 6 à 8
   Essai 2 : 80% PLA +20% B
   Essai 6 : 80% PLA +10% A+10% B, soit %A/%(A+B)=0,5
   Essai 7 : 80% PLA + 15% A+5% B, %A/%(A+B)=0,75
   Essai 8 : 80% PLA + 20% A+5% B, %A/%(A+B)=1
o Compositions selon l'invention : Essais 3 à 5
   Essai 3 : 80% PLA +2% A+18% B, soit %A/%(A+B)=0,1
   Essai 4 : 80% PLA +4% A+16% B, soit %A/%(A+B)=0,2
   Essai 5 : 80% PLA +6% A+14% B, soit %A/%(A+B)=0,3
   Mode de préparation des différentes compositions :
      ➢ Compoundage :
         Les compositions sont obtenues par compoundage sur une extrudeuse double vis L/D 30 munie d'un système de dégazage et d'une coupe à jonc, avec un débit de 15kg et une vitesse de vis de 280tr/min. Le profil de température utilisé est un profil de température croissant allant de 170°C à 200°C. La température matière est de 220°C:
         Avant le compoundage, le PLA a été séché pendant 4h à 70°C.
      ➢ Moulage des échantillons :
         Les granulés sont séchés puis moulés sur une presse à injecter type dans les conditions suivantes :
            ■ Température fourreau : 180/200°C
            ■ Température moule : 30°C
            ■ Pression d'injection : 1200 bar
            ■ Pression de maintien : 700 bar

Les éprouvettes normalisées (80 x 10 x 4mm³) ainsi obtenues sont recuites 30min à 100°C sous légère charge.

### Evaluation des compositions:

- Résistance aux chocs sur des éprouvettes préalablement entaillées du type Charpy selon la norme ISO 179 93 1 Ae à 23°C et -40°C.
- Indice de fluidité (MFI) mesuré selon la norme ISO 1133-1981-F à une température de 190°C et sous un poids de 2,16kg.

Les résultats des essais sont récapitulés dans le tableau 1 ci-après.

**Tableau 1**

| Essai | 1 | 2 | 3 | 4 | 5 | 6 | 7 | 8 |
|---|---|---|---|---|---|---|---|---|
| | (réf) | (comp.) | (inv.) | (inv.) | (inv.) | (comp.) | (comp.) | (comp.) |
| PLA % | 100 | 80 | 80 | 80 | 80 | 80 | 80 | 80 |
| A % | 0 | 0 | 2 | 4 | 6 | 10 | 15 | 20 |
| B % | 0 | 20 | 18 | 16 | 14 | 10 | 5 | 0 |
| %A/%(A+8) | - | - | 0,1 | 0,2 | 0,3 | 0,5 | 0,75 | 1 |
| Choc Charpy à 23°C (kJ/m²) | 3,8 | 6,5 | 16,1 | 20,9 | 21,4 | 24,5 | 20,7 | 16,6 |
| Choc Charpy à -40°C (kJ/m²) | 3,7 | 5 | 5,1 | 5,6 | 5 | 3,8 | 3,9 | 3,2 |
| MFI | 2,9 | 2,4 | 1,9 | 1,9 | 1,7 | 1,05 | 1,4 | 1,0 |

| | | | | | | | | |
|---|---|---|---|---|---|---|---|---|
| ➢ L'essai 1 montre clairement que le PLA est un matériau fragile nécessitant un renforcement au choc. Il sert de référence. ➢ L'essai 2 montre que sans le composé A, le niveau de renforcement reste faible, notamment à 23°C. ➢ Les essais comparatifs 6 à 8 correspondent à l'invention divulguée dans WO 2005/059031. De telles compositions renfermant majoritairement du composé A conduisent à un renforcement aux chocs satisfaisant à 23°C. En revanche, on n'observe aucune amélioration de la résistance aux chocs à -40°C, voire une légère fragilisation lorsque le composé A est utilisé seul. ➢ Les essais 3, 4 et 5 correspondent à l'invention. De telles compositions renfermant plus de 50 % de composé B dans le mélange A +B conduisent à d'excellentes résistances aux chocs à 23 °C ainsi qu'à -40°C. De - plus, ces compositions permettent de conserver une bonne fluidité. | | | | | | | | |

## Revendications

1. Composition de polyacide lactique comprenant en poids:
- 60 à 97 % de polyacide lactique (PLA) et,
- 3 à 40 % d'un mélange de composés A et B dans lequel,
o A est un copolymère d'éthylène et d'un monomère insaturé porteur d'au moins une fonction époxyde ou acide carboxylique ou anhydride d'acide carboxylique, et éventuellement de (méth)acrylate d'alkyle.
o B est un copolymère d'éthylène et de (méth)acrylate d'alkyle,
le dit mélange présentant un rapport % poids (A) / (% poids (A +B)) compris entre 0,10 et 0,49.

2. Composition selon la revendication 1, **caractérisée en ce que** A est choisi parmi le terpolymère éthylène-(méth)acrylate d'alkyle-anhydride maléique et le terpolymère éthylène-(méth)acrylate d'alkyle-méthacrylate de glycidyle.

3. Composition selon la revendication 1 ou 2, **caractérisée en ce que** A est un copolymère de l'éthylène, de l'acrylate de méthyle et du méthacrylate de glycidyle.

4. Composition selon l'une quelconque des revendications 1 à 3, **caractérisée en ce que** B est un copolymère de l'éthylène et de l'acrylate de méthyle, d'éthyle, de n-butyle, d'isobutyle, de n-octyle ou de 2-éthylhexyle.

5. Composition selon l'une quelconque des revendications 1 à 4, **caractérisée en ce que** le rapport % poids (A) / (% poids (A +B)) du mélange est compris entre 0,15 et 0,40, et préférentiellement entre 0,20 et 0,30.

6. Procédé de préparation de la composition selon l'une quelconque des revendications 1 à 5 dans lequel on réalise par extrusion le mélange simultané du PLA, de A et de B.

7. Procédé de préparation de la composition selon l'une des revendications 1 à 5, dans lequel on réalise par extrusion:
- dans une première étape le mélange par extrusion de A et B puis,
- dans une seconde étape le mélange par extrusion du produit issu de la première étape avec le PLA.

8. Pièce ou objet obtenu à partir de la composition selon l'une quelconque des revendications 1 à 5, **caractérisée en ce que** la pièce ou objet est réalisé par un procédé choisi parmi le moulage, l'extrusion, et le thermoformage.

9. Pièce ou objet selon la revendication 8, dont la réalisation comprend en outre une étape de recuit.

10. Structure multicouche comprenant une couche de la composition selon l'une des revendications 1 à 5 et au moins une couche d'un thermoplastique choisi parmi le polyéthylène (PE), le polypropylène (PP), le polystyrène (PS), le polyamide (PA) et le copolymère éthylène / alcool vinylique (EVOH).

## Claims

1. A polylactic acid composition comprising, by weight:
- 60% to 97% of polylactic acid (PLA), and
- 3% to 40% of a mixture of compounds A and B in which:
o A is a copolymer of ethylene and of an unsaturated monomer bearing at least one epoxide or carboxylic acid or carboxylic acid anhydride function, and optionally of alkyl (meth)acrylate,
o B is a copolymer of ethylene and of alkyl (meth)acrylate,
said mixture having a weight% (A)/weight% (A + B) ratio of between 0.10 and 0.49.

2. The composition as claimed in claim 1, **characterized in that** A is chosen from the ethylene-alkyl (meth)acrylate-maleic anhydride terpolymer and the ethylene-alkyl (meth)acrylate-glycidyl methacrylate terpolymer.

3. The composition as claimed in claim 1 or 2, **characterized in that** A is a copolymer of ethylene, of methyl acrylate and of glycidyl methacrylate.

4. The composition as claimed in any one of claims 1 to 3, **characterized in that** B is a copolymer of ethylene and of methyl, ethyl, n-butyl, isobutyl, n-octyl or 2-ethylhexyl acrylate.

5. The composition as claimed in any one of claims 1 to 4, **characterized in that** the weight% (A)/weight% (A + B) ratio of the mixture is between 0.15 and 0.40 and preferentially between 0.20 and 0.30.

6. A process for preparing the composition as claimed in any one of claims 1 to 5, in which the simultaneous mixing of the PLA, A and B is performed by extrusion.

7. The process for preparing the composition as claimed in one of claims 1 to 5, in which the following are performed by extrusion:
- in a first step, mixing by extrusion of A and B, and then
- in a second step, mixing by extrusion of the product obtained from the first step with PLA.

8. A component or object obtained from the composition as claimed in any one of claims 1 to 5, **characterized in that** the component or object is prepared via a process chosen from molding, extrusion and thermoforming.

9. The component or object as claimed in claim 8, whose preparation also comprises an annealing step.

10. A multilayer structure comprising a layer of the composition as claimed in one of claims 1 to 5 and at least one layer of a thermoplastic chosen from polyethylene (PE), polypropylene (PP), polystyrene (PS), polyamide (PA) and the ethylene/vinyl alcohol (EVOH) copolymer.

## Patentansprüche

1. Polymilchsäurezusammensetzung, umfassend, bezogen auf das Gewicht:
- 60 bis 97% Polymilchsäure (PLA) und
- 3 bis 40% einer Mischung von Verbindungen A und B, worin
o A ein Copolymer von Ethylen und einem ungesättigten Monomer mit mindestens einer Epoxid- oder Carbonsäure- oder Carbonsäureanhydridfunktion und gegebenenfalls Alkyl-(meth)acrylat ist,
o B ein Copolymer von Ethylen und Alkyl-(meth)acrylat ist,
wobei die Mischung ein Verhältnis Gew.-% (A)/Gew.- % (A+B) zwischen 0,10 und 0,49 aufweist.

2. Zusammensetzung nach Anspruch 1, **dadurch gekennzeichnet, daß** A unter Ethylen-Alkyl(meth)acrylat-Maleinsäureanhydrid-Terpolymer und Ethylen-Alkyl-(meth)acrylat-Glycidylmethacrylat-Terpolymer ausgewählt ist.

3. Zusammensetzung nach Anspruch 1 oder 2, **dadurch gekennzeichnet, daß** A ein Copolymer von Ethylen, Methylacrylat und Glycidylmethacrylat ist.

4. Zusammensetzung nach einem der Ansprüche 1 bis 3, **dadurch gekennzeichnet, daß** B ein Copolymer von Ethylen und Methyl-, Ethyl-, n-Butyl-, Isobutyl-, n-Octyl- oder 2-Ethylhexylacrylat ist.

5. Zusammensetzung nach einem der Ansprüche 1 bis 4, **dadurch gekennzeichnet, daß** das Verhältnis Gew.-% (A)/Gew.-% (A+B) der Mischung zwischen 0,15 und 0,40 und vorzugsweise zwischen 0,20 und 0,30 liegt.

6. Verfahren zur Herstellung der Zusammensetzung nach einem der Ansprüche 1 bis 5, bei dem das gleichzeitige Mischen von PLA, A und B durch Extrusion erfolgt.

7. Verfahren zur Herstellung der Zusammensetzung nach einem der Ansprüche 1 bis 5, bei dem:
- in einem ersten Schritt das Mischen von A und B durch Extrusion und dann
- in einem zweiten Schritt das Mischen des Produkts aus dem ersten Schritt mit der PLA durch Extrusion
durch Extrusion erfolgt.

8. Teil oder Objekt, erhalten aus der Zusammensetzung nach einem der Ansprüche 1 bis 5, **dadurch gekennzeichnet, daß** das Teil oder Objekt durch ein unter Gußformen, Extrusion und Thermoformen ausgewähltes Verfahren hergestellt wird.

9. Teil oder Objekt, dessen Herstellung außerdem einen Temperschritt umfaßt.

10. Mehrschichtstruktur, umfassend eine Schicht aus der Zusammensetzung nach einem der Ansprüche 1 bis 5 und mindestens eine Schicht aus einem unter Polyethylen (PE), Polypropylen (PP), Polystyrol (PS), Polyamid (PA) und Ethylen-Vinylalkohol-Copolymer (EVA) ausgewählten Thermoplast.
